# EUROPÄISCHE PATENTSCHRIFT

(11) **EP 2 350 480 B1**
(45) Veröffentlichungstag und Bekanntmachung des Hinweises auf die Patenterteilung: **11.07.2012**
(21) Anmeldenummer: 09783629.0
(22) Anmeldetag: 01.10.2009
(51) Int. Cl.: F16C 29/04, F16H 63/30, G01D 5/14, F16H 59/70, F16C 41/00, F16C 33/62

(54) **VORRICHTUNG UMFASSEND EIN BETÄTIGUNGSELEMENT EINES ZAHNRÄDERWECHSELGETRIEBES**
DEVICE COMPRISING AN ACTUATING ELEMENT OF A VARIABLE-SPEED GEARBOX
DISPOSITIF COMPRENANT UN ELEMENT D'ACTIONNEMENT D'UNE BOITE DE VITESSES A ROUES DENTEES

(30) Priorität: 21.10.2008 DE 102008052416
(43) Veröffentlichungstag der Anmeldung: 03.08.2011
(73) Patentinhaber: Schaeffler Technologies AG & Co. KG, 91074 Herzogenaurach (DE)
(72) Erfinder: KRÄMER, Klaus, 91460 Baudenbach (DE); NEHMEYER, Thomas, 90491 Nürnberg (DE)
(86) Internationale Anmeldenummer: PCT/EP2009/062738
(87) Internationale Veröffentlichungsnummer: WO 2010/046219

(56) Entgegenhaltungen:
- DE-A1- 4 136 988
- DE-A1- 4 208 888
- DE-A1- 19 925 563
- DE-A1-102004 060 771
- DE-A1-102007 006 322

## Beschreibung

### Gebiet der Erfindung

Die Erfindung betrifft eine Vorrichtung umfassend ein Betätigungselement eines Zahnräderwechselgetriebes, wobei das Betätigungselement mittels mindestens einer Wälzlagereinheit zumindest in eine Verschieberichtung translatorisch verschieblich gelagert ist und wobei die Wälzlagereinheit mit einer Magnet-Sensor-Einheit zur Erfassung der relativen Position zwischen dem Betätigungselement und einem ortsfesten Teil der Wälzlagereinheit versehen ist.

### Hintergrund der Erfindung

In Zahnräderwechselgetrieben werden üblicherweise Schaltelemente in Form von Schaltwellen, Schaltschienen oder Schaltstangen eingesetzt, die zumindest in eine translatorische Richtung, zusätzlich ggf. auch um eine Rotationsachse, verschieblich bzw. verdrehbar sein müssen. Hierfür werden Wälzlagerungen eingesetzt.

Im Zuge der Verbesserung des Schaltkomforts und der Schaltsicherheit ist es erforderlich, die genaue Position des Schaltelements zu ermitteln, um Funktionen wie z. B. den Start bzw. den Stopp des Motors zu automatisieren oder die Gangposition für spezielle Schaltstrategien zu verwenden.

Es ist dabei bekannt, für die Positionserkennung der Schaltelemente Sensoren einzusetzen. Die DE 197 51 519 A1 offenbart einen Linearsensor, der einen Magneten und einen Hall-Sensor umfasst, um die lineare Relativposition zwischen zwei Bauteilen detektieren zu können. Um das Magnetfeld nicht zu beeinträchtigen und somit das Messergebnis nicht zu verfälschen, ist bei dieser vorbekannten Lösung vorgesehen, dass die relevanten Tragelemente für die Sensorik aus Kunststoff bestehen.

In Zahnräderwechselgetrieben ist bereits bekannt, derartige Sensoren zur Positionserfassung von Schaltelementen einzusetzen. Dabei werden zumeist berührungslose Magnetsensoren eingesetzt, wobei ein Magnet an einem Schaltelement (Schaltstange, Schaltschiene oder Schaltgabel) befestigt werden; über einen Sensor wird dann durch Messung der magnetischen Feldstärke der Schaltweg erfasst.

Die Magneten und Sensorelemente sind dabei als separate, nicht integrierte Elemente vorgesehen, da sie nicht im Bereich der Linearführung selber platziert werden können, da es im Bereich der aus Stahl bestehenden Bauteile der Linearführung zu einer Beeinflussung des magnetischen Feldes kommen würde. Vielmehr müssen die Sensorelemente außerhalb des Lagerungsbereichs angeordnet werden, was zu erhöhten Anforderungen an den zur Verfügung stehenden Bauraum führt.

Bei der Positionserkennung mittels Magnetfeldsensoren ist es also zwingend erforderlich, dass sich kein ferromagnetisches Bauteil im Luftspalt zwischen dem Positionsmagnet und dem Sensor befindet. Der Magnet, der sich ortsfest auf dem zu messenden Bauteil befindet, erzeugt ein Magnetfeld, dessen Stärke oder Richtung vom Sensor erfasst wird, aus dem sich die Position des Magneten bestimmen lässt und damit die Schaltposition berechnet werden kann.

Um eine hinreichende Genauigkeit der Messung zu gewährleisten bzw. überhaupt erst zu ermöglichen, muss also eine Beeinträchtigung der Magnetfeldstärke oder der vektoriellen Ausrichtung - wie sie beispielsweise durch die

Einbringung eines ferromagnetischen Material entsteht - verhindert werden. Aus diesem Grunde wäre die Integration einer Magnet-Sensor-Einheit in eine klassische Wälzlagerlineareinheit nur dann möglich, wenn die Wälzkörperlauffläche, d. h. die Laufhülse, durchbrochen wäre. Damit könnte der Sensor so weit in die Metallhülse eindringen, dass sich zwischen dem Magneten und dem Sensor kein störendes Element befindet.

Allerdings kommt eine solche Lösung deshalb nicht in Betracht, weil dadurch die Festigkeit der Laufhülse signifikant geschwächt würde.

Die DE 41 36 988 A1 offenbart eine Vorrichtung gemäß dem Oberbegriff des Anspruchs 1.

### Aufgabe der Erfindung

Der vorliegenden Erfindung liegt daher die Aufgabe zugrunde, eine Vorrichtung der eingangs genannten Art so fortzubilden, dass einerseits eine kompakte und stabile Bauweise erreicht wird, dass andererseits aber eine einwandfreie Ermittlung der Position des Betätigungselements ermöglicht wird.

### Zusammenfassung der Erfindung

Die Lösung dieser Aufgabe durch die Erfindung ist dadurch gekennzeichnet, dass die Wälzlagereinheit eine Laufhülse mit mindestens einer Laufbahn für Wälzkörper aufweist, wobei die Laufhülse aus einem metallischen, nicht ferromagnetischen Material besteht. Das Material der Laufhülse ist dabei bevorzugt ein Stahlwerkstoff. Das Material der Laufhülse weist dabei mit Vorteil bei 20 °C ein austenitisches Gefüge auf. Ferner ist das Material der Laufhülse bevorzugt härtbar.

Der Magnet der Magnet-Sensor-Einheit ist zwecks Erhalts einer kompakten Bauweise bevorzugt im Bereich der axialen Erstreckung der Wälzlagereinheit angeordnet.

Der Magnet der Magnet-Sensor-Einheit kann dabei fest mit dem Betätigungselement verbunden sein. Er kann ringförmig ausgebildet sein und das Betätigungselement umgreifen.

Die Magnet-Sensor-Einheit umfasst bevorzugt einen Hall-Sensor oder einen magnetoresistiven Sensor.

Die Laufhülse hat zwecks Erhalts einer stabilen und steifen Struktur bevorzugt eine ununterbrochene Struktur über ihren Umfang.

Die Wälzlagereinheit kann ein Gehäuse aufweisen, das die Laufhülse trägt. Das Gehäuse besteht dabei vorzugsweise aus Kunststoff. Es kann eine Aufnahmenut für den Sensor der Magnet-Sensor-Einheit aufweisen.

Über den Umfang des Betätigungselements können mehrere Wälzkörper zwischen dem Betätigungselement und der Laufhülse angeordnet sein. Bei den Wälzkörpern handelt es sich vorzugsweise um Kugeln.

Das Betätigungselement ist zumeist eine Schaltstange oder eine Schaltschiene.

Durch die Verwendung des besonderen Materials für die Laufhülse wird eine kompakte Einheit für das Schaltelement geschaffen, die es ermöglicht, trotz des benötigten Stahlwerkstoffs für die Laufhülse die Positionserkennung mittels der Magnetsensorik durchzuführen, ohne dass die Sensoreinheit die Laufhülse körperlich durchdringen muss und damit schwächt, um das Magnetfeld der Positionsmagneten zu erfassen.

Als Material für die Laufhülse wird kein Wälzlagerstahl oder sonstiges konventionelles Material verwendet, sondern die Laufhülse wird aus einem nicht ferromagnetischen Material gefertigt.

Dadurch, dass auf der Laufhülse die Wälzkörper unter Last abrollen, muss diese eine gewisse Mindestoberflächenhärte aufweisen. Die Verwendung von Kunststoff oder auch von Leichtmetall (Aluminium) als nicht bzw. nur gering ferromagnetischem Material als Hülsenwerkstoff scheidet daher aus.

Daher muss für die Laufhülse Stahl verwendet werden, der sein austenitisches Gefüge bei Raumtemperatur besitzt und damit nicht ferromagnetisch ist. Zudem soll das Material oberflächenhärtbar sein, um die notwendige Härte für den Anlauf der Wälzkörper zu haben. Solch ein Stahl ist als Sonderstahl für Speziallager bekannt.

Durch die Verwendung einer solchen nicht ferromagnetischen, oberflächenhärtbaren Laufhülse ist es möglich, den Sensor außerhalb der Hülse zu platzieren, da die Magnetfelder die Hülse durchdringen und den Sensor unbeeinflusst erreichen können.

Der Magnet kann auch als Ringmagnet ausgeführt werden, so dass kein gerichteter Einbau (Zuordnung des Sensors zum Magnet) nötig ist.

Die Vorteile der vorgeschlagenen Lösung bestehen also zunächst in der Integration der Positionssensorik in die Wälzlagereinheit, was durch die Verwendung eines nicht ferromagnetischen, oberflächenhärtbaren Stahls für die Laufhülse erreicht wird.

Weiterhin wird die Anordnung der Magnetsensorik radial außerhalb der Laufhülse möglich, beispielsweise eingebettet in das Trägergehäuse, das aus einem Kunststoff bestehen kann.

Hierdurch wird eine sehr kurze und kompakte Bauweise erreicht.

Es sind weiterhin keine Durchbrüche in der Laufhülse nötig, um die Magnetfelderfassung der Sensorik zu ermöglichen. Daher ergibt sich keine mechanische Schwächung der Laufhülse.

### Kurze Beschreibung der Figuren

In den Zeichnungen ist ein Ausführungsbeispiel der Erfindung dargestellt. Es zeigen:
- Fig. 1: eine Vorrichtung mit einem Betätigungselement in Form einer Schaltstange, die in einer Wälzlagereinheit längsbeweglich gelagert ist, in der Seitenansicht im Schnitt A-B gemäß Fig. 2 und
- Fig. 2: die Vorrichtung in der Vorderansicht im Schnitt C-D gemäß Fig. 1.

### Ausführliche Beschreibung der Figuren

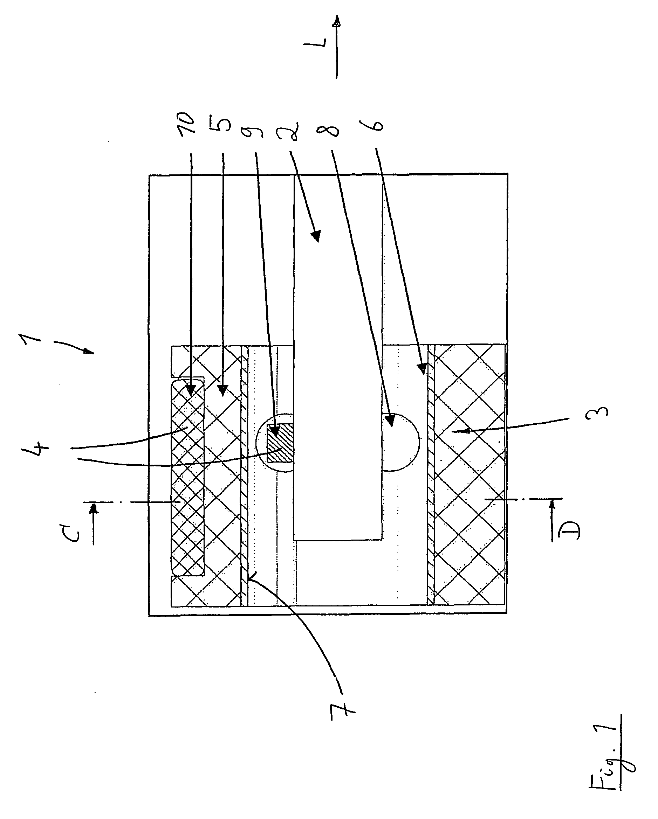

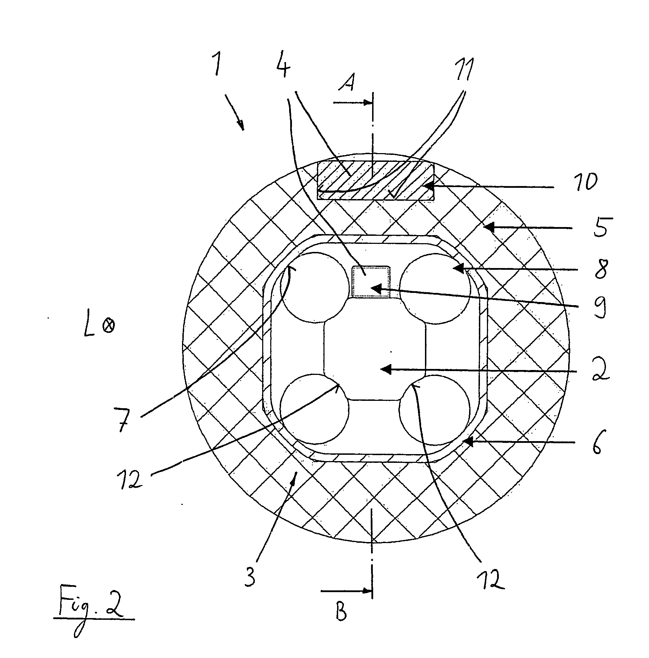

In den Figuren ist eine Vorrichtung 1 zu sehen, die Bestandteil eines Zahnräderwechselgetriebes ist. Die Vorrichtung umfasst ein Betätigungselement 2 in Form einer Schaltstange, die in eine Verschieberichtung L verschiebbar gelagert ist. Hierzu dient eine Wälzlagereinheit 3 in Form eines Linearlagers. Die Wälzlagereinheit hat - wie die Zusammenschau der Figuren 1 und 2 zeigt - eine Laufhülse 6, die über den Umfang verteilt (s. Fig. 2) vier Laufbahnen 7 für Wälzkörper 8 in Form von Kugeln aufweist. Der Umfang der Schaltstange 2 hat korrespondierende Laufbahnen 12 zum Anlauf der Kugeln 8.

Die Laufhülse 6 ist in einem Kunststoffgehäuse 5 untergebracht, die einen ortfesten Teil der Wälzlagereinheit darstellt.

Die Vorrichtung 1 soll es ermöglichen, die relative Position zwischen dem Betätigungselement 2 und dem ortsfesten Teil 5 (Gehäuse) der Wälzlagereinheit festzustellen, und zwar in einer solchen Weise, dass eine kompakte und steife Bauweise der Vorrichtung sichergestellt wird.

Zur Positionsermittlung ist die Vorrichtung mit einer Magnet-Sensor-Einheit 4 ausgestattet. Die Einheit umfasst einen (Permanent-)Magneten 9 und einen Sensor 10; bei dem Sensor handelt es sich um einen Sensor auf Hall-Basis oder einen magnetoresistiven Sensor. Hall-Sensoren erzeugen eine Hallspannung im Magnetfeld, abhängig von der Magnetfeldstärke. Magnetoresistive Sensoren verändern ihren Widerstand abhängig von der Magnetfeldrichtung.

Der Sensor 10 ist in einer Aufnahmenut 11 im Gehäuse 5 untergebracht. Der Sensor 9 ist - wie Fig. 1 zeigt - in einem Bereich an dem Betätigungselement 2 befestigt, der innerhalb der axialen Erstreckung der Laufhülse 6 liegt.

Damit trotz des über den Umfang unterbrechungsfreien Aufbaus der Laufhülse 6 keine Störung des magnetischen Feldes des Magneten 9 stattfindet, ist vorgesehen, dass die Laufhülse 6 aus einem metallischen, nicht ferromagnetischen Material besteht. Es handelt sich dennoch um einen Stahlwerkstoff, der eine Oberflächenhärtung zulässt. Solche Stähle sind im Speziallageerbau bekannt und zeichnen sich dadurch aus, dass bei 20 °C ein austenitisches Gefüge im Material vorliegt.

Vorgesehen ist hierbei also ein härtbarer, amagnetischer Werkstoff, dessen austenitisches Gefüge dafür sorgt, dass das Material nicht ferromagnetisch ist. Solche Werkstoffe sind hochlegiert, beispielsweise handelt es sich um X5 CrNi 1810. Diese Stähle werden beispielsweise in Kugellagern in Kernspintomographen verwendet. Durch ein spezielles Härteverfahren wird das austenitische Gefüge beim Härten beibehalten. Normale, härtbare Stähle sind dem gegenüber ferromagnetisch, weil sie eine andere Gefügestruktur haben. Nicht ferromagnetische Stähle, wie beispielsweise Edelstahl, sind indes nicht härtbar.

### Bezugszeichenliste

- 1: Vorrichtung
- 2: Betätigungselement (Schaltstange / Schaltschiene)
- 3: Wälzlagereinheit (Linearlager)
- 4: Magnet-Sensor-Einheit
- 5: ortsfester Teil (Gehäuse)
- 6: Laufhülse
- 7: Laufbahn
- 8: Wälzkörper (Kugel)
- 9: Magnet der Magnet-Sensor-Einheit
- 10: Sensor der Magnet-Sensor-Einheit (Hall-Sensor)
- 11: Aufnahmenut
- 12: Laufbahn

- L: Verschieberichtung

## Patentansprüche

1. Vorrichtung (1) umfassend ein Betätigungselement (2) eines Zahnräderwechselgetriebes, wobei das Betätigungselement (2) mittels mindestens einer Wälzlagereinheit (3) zumindest in eine Verschieberichtung (L) translatorisch verschieblich gelagert ist, **dadurch gekennzeichnet, dass** die Wälzlagereinheit (3) mit einer Magnet-Sensor-Einheit (4) zur Erfassung der relativen Position zwischen dem Betätigungselement (2) und einem ortsfesten Teil (5) der Wälzlagereinheit (3) versehen ist, wobei die Wälzlagereinheit (3) eine Laufhülse (6) mit mindestens einer Laufbahn (7) für Wälzkörper (8) aufweist, wobei die Laufhülse (6) aus einem metallischen, nicht ferromagnetischen Material besteht.

2. Vorrichtung nach Anspruch 1, **dadurch gekennzeichnet, dass** das Material der Laufhülse (6) ein Stahlwerkstoff ist.

3. Vorrichtung nach Anspruch 1, **dadurch gekennzeichnet, dass** das Material der Laufhülse (6) bei 20 °C ein austenitisches Gefüge aufweist.

4. Vorrichtung nach Anspruch 1, **dadurch gekennzeichnet, dass** das Material der Laufhülse (6) härtbar ist.

5. Vorrichtung nach Anspruch 1, **dadurch gekennzeichnet, dass** der Magnet (9) der Magnet-Sensor-Einheit (4) im Bereich der axialen Erstreckung der Wälzlagereinheit (3) angeordnet ist.

6. Vorrichtung nach Anspruch 1, **dadurch gekennzeichnet, dass** der Magnet (9) der Magnet-Sensor-Einheit (4) fest mit dem Betätigungselement (2) verbunden ist.

7. Vorrichtung nach Anspruch 6, **dadurch gekennzeichnet, dass** der Magnet (9) der Magnet-Sensor-Einheit (4) ringförmig ausgebildet ist und das Betätigungselement (2) umgreift.

8. Vorrichtung nach Anspruch 1, **dadurch gekennzeichnet, dass** die Magnet-Sensor-Einheit (4) einen Hall-Sensor (10) umfasst.

9. Vorrichtung nach Anspruch 1, **dadurch gekennzeichnet, dass** die Laufhülse (6) eine ununterbrochene Struktur über ihren Umfang bildet.

10. Vorrichtung nach Anspruch 1, **dadurch gekennzeichnet, dass** die Wälzlagereinheit (3) ein Gehäuse (5) aufweist, das die Laufhülse (6) trägt.

11. Vorrichtung nach Anspruch 10, **dadurch gekennzeichnet, dass** das Gehäuse (5) aus Kunststoff besteht.

12. Vorrichtung nach Anspruch 10, **dadurch gekennzeichnet, dass** das Gehäuse (5) eine Aufnahmenut (11) für den Sensor (10) der Magnet-Sensor-Einheit (4) aufweist.

13. Vorrichtung nach Anspruch 1, **dadurch gekennzeichnet, dass** über den Umfang des Betätigungselements (2) mehrere Wälzkörper (8) zwischen dem Betätigungselement (2) und der Laufhülse (6) angeordnet sind.

14. Vorrichtung nach Anspruch 1, **dadurch gekennzeichnet, dass** die Wälzkörper (8) Kugeln sind.

15. Vorrichtung nach Anspruch 1, **dadurch gekennzeichnet, dass** das Betätigungselement (2) eine Schaltstange oder eine Schaltschiene ist.

## Claims

1. Apparatus (1) comprising an operating element (2) of a change-speed gearbox, with the operating element (2) being mounted such that it can be displaced in a translatory manner at least in a displacement direction (L) by means of at least one roller bearing unit (3), **characterized in that** the roller bearing unit (3) is provided with a magnet/sensor unit (4) for detecting the relative position between the operating element (2) and a stationary part (5) of the roller bearing unit (3), with the roller bearing unit (3) having a running sleeve (6) with at least one running track (7) for roller bodies (8), with the running sleeve (6) being composed of a metallic, non-ferromagnetic material.

2. Apparatus according to Claim 1, **characterized in that** the material of the running sleeve (6) is a steel material.

3. Apparatus according to Claim 1, **characterized in that** the material of the running sleeve (6) has an austenitic microstructure at 20°C.

4. Apparatus according to Claim 1, **characterized in that** the material of the running sleeve (6) can be cured.

5. Apparatus according to Claim 1, **characterized in that** the magnet (9) of the magnet/sensor unit (4) is arranged in the region of the axial extent of the roller bearing unit (3).

6. Apparatus according to Claim 1, **characterized in that** the magnet (9) of the magnet/sensor unit (4) is firmly connected to the operating element (2).

7. Apparatus according to Claim 6, **characterized in that** the magnet (9) of the magnet/sensor unit (4) is of annular design and surrounds the operating element (2).

8. Apparatus according to Claim 1, **characterized in that** the magnet/sensor unit (4) comprises a Hall sensor (10).

9. Apparatus according to Claim 1, **characterized in that** the running sleeve (6) forms an uninterrupted structure over its circumference.

10. Apparatus according to Claim 1, **characterized in that** the roller bearing unit (3) has a housing (5) which supports the running sleeve (6).

11. Apparatus according to Claim 10, **characterized in that** the housing (5) is composed of plastic.

12. Apparatus according to Claim 10, **characterized in that** the housing (5) has an accommodation groove (11) for the sensor (10) of the magnet/sensor unit (4).

13. Apparatus according to Claim 1, **characterized in that** a plurality of rolling bodies (8) are arranged between the operating element (2) and the running sleeve (6) over the circumference of the operating element (2).

14. Apparatus according to Claim 1, **characterized in that** the roller bodies (8) are balls.

15. Apparatus according to Claim 1, **characterized in that** the operating element (2) is a switching rod or a switching rail.

## Revendications

1. Dispositif (1) comprenant un élément d'actionnement (2) d'une boîte de vitesses à roues dentées, l'élément d'actionnement (2) étant disposé de façon à pouvoir se déplacer translationnellement au moins dans une direction de déplacement (L) à laide d'au moins une unité de palier de roulement (3), **caractérisé en ce que** l'unité de palier de roulement (3) est pourvue d'une unité de détection d'aimant (4) servant à détecter la position relative entre l'élément d'actionnement (2) et une partie fixe (5) de l'unité de palier de roulement (3), l'unité de palier de roulement (3) comportant un manchon de roulement (6) doté d'au moins une piste de roulement (7) pour le corps de rouleau (8), le manchon de roulement (6) étant réalisé à partir d'un matériau métallique non ferromagnétique.

2. Dispositif selon la revendication 1, **caractérisé en ce que** le matériau du manchon de roulement (6) est un acier.

3. Dispositif selon la revendication 1, **caractérisé en ce que** le matériau du manchon de roulement (6) présente une structure austénitique à 20 °C.

4. Dispositif selon la revendication 1, **caractérisé en ce que** le matériau du manchon de roulement (6) est durcissable.

5. Dispositif selon la revendication 1, **caractérisé en ce que** l'aimant (9) de l'unité de détection d'aimant (4) est disposé dans la région du prolongement axial de l'unité de palier de roulement (3).

6. Dispositif selon la revendication 1, **caractérisé en ce que** l'aimant (9) de l'unité de détection d'aimant (4) est relié fixement à l'élément d'actionnement (2).

7. Dispositif selon la revendication 6, **caractérisé en ce que** l'aimant (9) de l'unité de détection d'aimant (4) prend une forme annulaire et enserre en périphérie l'élément d'actionnement (2).

8. Dispositif selon la revendication 1, **caractérisé en ce que** l'unité de détection d'aimant (4) comprend un capteur à effet de Hall (10).

9. Dispositif selon la revendication 1, **caractérisé en ce que** le manchon de roulement (6) forme une structure ininterrompue sur l'ensemble de sa périphérie.

10. Dispositif selon la revendication 1, **caractérisé en ce que** l'unité de palier de roulement (3) comporte un carter (5) supportant le manchon de roulement (6).

11. Dispositif selon la revendication 10, **caractérisé en ce que** le carter (5) est en matière plastique.

12. Dispositif selon la revendication 10, **caractérisé en ce que** le carter (5) comporte une rainure de logement (11) pour le capteur (10) de l'unité de détection d'aimant (4).

13. Dispositif selon la revendication 1, **caractérisé en ce que** plusieurs corps de rouleau (8) sont disposés sur l'ensemble de la périphérie de l'élément d'actionnement (2) entre l'élément d'actionnement (2) et le manchon de roulement (6).

14. Dispositif selon la revendication 1, **caractérisé en ce que** les corps de rouleau (8) sont des sphères.

15. Dispositif selon la revendication 1, **caractérisé en ce que** l'élément d'actionnement (2) est une tringle de changement de vitesse ou un rail de changement de vitesse.
